Europäisches Patentamt

European Patent Office

Office européen des brevets

(19)

(11) Veröffentlichungsnummer: **0 048 394**
**B1**

(12) **EUROPÄISCHE PATENTSCHRIFT**

(45) Veröffentlichungstag der Patentschrift:
**06.02.85**

(21) Anmeldenummer: **81107098.6**

(22) Anmeldetag: **09.09.81**

(51) Int. Cl.⁴: **G 01 S 13/60,** G 01 S 13/52,
G 01 S 13/92

(54) **Fahrzeug-Dopplerradargerät.**

(30) Priorität: **19.09.80 DE 3035374**

(43) Veröffentlichungstag der Anmeldung:
**31.03.82 Patentblatt 82/13**

(45) Bekanntmachung des Hinweises auf die Patenterteilung:
**06.02.85 Patentblatt 85/6**

(84) Benannte Vertragsstaaten:
**AT DE FR IT**

(56) Entgegenhaltungen:
**WO - A - 80/01418**
**DE - B - 2 601 495**
**FR - A - 1 540 352**
**FR - A - 2 123 350**
**US - A - 3 125 315**
**US - A - 4 012 736**

(73) Patentinhaber: **Licentia Patent-Verwaltungs-GmbH,**
**Theodor-Stern-Kai 1, D-6000 Frankfurt/Main 70 (DE)**

(72) Erfinder: **Franke, Hans-Joachim, Lichtensteinstrasse 16,**
**D-7901 Dornstadt (DE)**

(74) Vertreter: **Schickle, Gerhard, Dipl.-Ing. et al, Licentia**
**Patent-Verwaltungs-GmbH Theodor-Stern-Kai 1,**
**D-6000 Frankfurt/Main 70 (DE)**

## Beschreibung

Die Erfindung betrifft ein Fahrzeug-Dopplerradargerät gemäss dem Oberbegriff des Patentanspruchs 1. Ein aus der PCT-Druckschrift WO-A 8 001 418 bekanntes Dopplerradargerät dieser Art besitzt eine Filterbank aus Bandfiltern. Zur Steuerung der Verknüpfungslogik ist eine PLL-Schaltung vorgesehen. Diese ist am Eingangsverstärker des Dopplersignalkanals direkt angebunden. Nachteilig an dieser Schaltung ist, dass vorhandene Störsignale mit im Vergleich zum Nutzsignal grosser Amplitude eine Geschwindigkeitsmessung verhindern, da die PLL-Schaltung auf dieser Störfrequenz einrastet und deshalb die nachgeschaltete Verknüpfungslogik kein dem vorhandenen Dopplersignal entsprechendes Ausgangssignal liefern kann.

Der Erfindung liegt die durch die im Patentanspruch 1 angegebenen Massnahmen gelöste Aufgabe zugrunde, eine unterbrechungsfreie Geschwindigkeitsmessung auch dann durchzuführen, wenn die Fahrbahnoberfläche in den Dopplerschwingungen zu niederfrequenten Störsignalen führt, die sich dem Doppler-Nutzsignal mit im Verhältnis zu derjenigen des Nutzsignals oft sehr grosser Amplitude überlagern und vorübergehend die genaue Geschwindigkeitsmessung beeinträchtigen oder zeitweise unterbrechen können. Die Unteransprüche betreffen Weiterbildungen der Erfindung.

Die beim Erfindungsgegenstand vorgesehene Hochpassfilterbank unterdrückt die relativ zum jeweiligen Nutzsignal niederfrequenteren Störsignale.

Der erfinderischen Aufgabe liegt die neue Erkenntnis zugrunde, dass Messwertverfälschungen oder -unterbrechungen bei einem gattungsgemässen Radargerät auftreten können, wenn das Fahrzeug eine Fahrbahn mit einer die Geschwindigkeitsmessung störenden Oberfläche befährt. Eine solche Störung ist beispielsweise bei Kopfsteinpflaster (auch teervergossenem Pflaster), bei welligem Asphalt oder bei der Überquerung von Bahnübergängen und Schienenweichen gelegentlich zu beobachten, beispielsweise in der Form recht häufiger Signaleinbrüche.

Die Erfindung entstört das jeweilige Messergebnis aber auch gegenüber anderen Störquellen, beispielsweise niederfrequent modulierten Störschwingungen, die von anderen Hochfrequenzsendern stammen.

Die Erfindung nutzt somit die sie stützende neue Erkenntnis aus, dass nur die höherfrequenten Anteile eines gestörten Dopplersignals bei einem gattungsgemässen Radargerät die Nutzinformation enthalten, welche es zu selektieren gilt, um die der Erfindung zugrunde liegende Aufgabe zu lösen.

Die Anzahl der Hochpässe in der Filterbank und die jeweilige Filteranordnungszahl sind im Sinne der Erfindung nach Massgabe des zu erwartenden Geschwindigkeitsbereichs und der erwartbaren Störfrequenzen (Störfrequenzspektren) zu wählen.

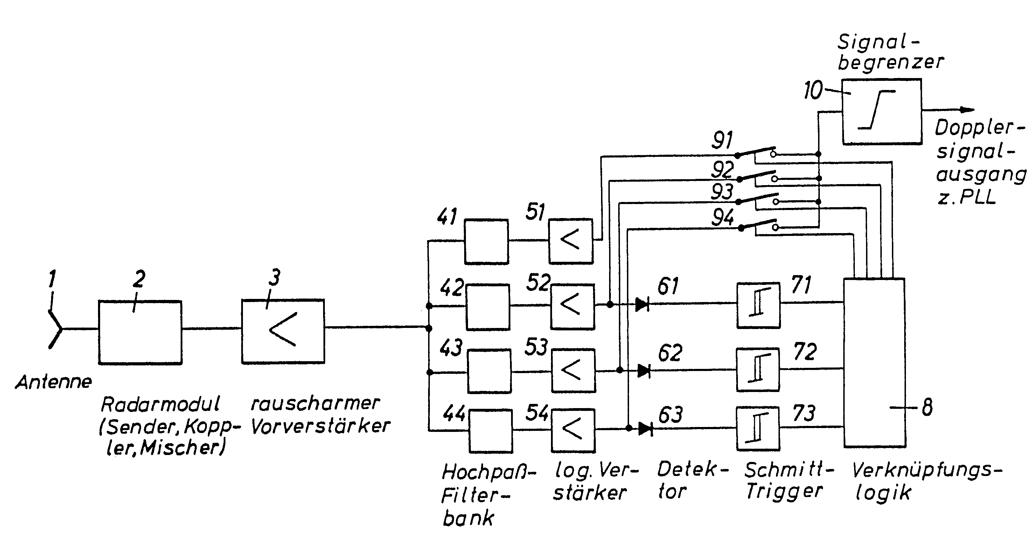

Die Abbildung zeigt ein bevorzugtes Ausführungsbeispiel der Erfindung im Blockschaltbild.

Ein an eine Antenne 1 angeschlossener Radarmodul 2 gibt unter Umständen gestörte (mit Störfrequenzen überlagerte) Dopplerschwingungen über einen möglichst rauscharmen Vorverstärker 3 auf eine Hochpass-Filterbank, zu der im Beispielsfall die Filter 41 bis 44 gehören. Ihnen folgen logarithmische Verstärker 51 bis 54. Über Detektoren 61 bis 63 und nachfolgende Schmitt-Trigger 71 bis 73 gelangen die ggf. gestörten niederfrequenten Schwingungen auf eine an sich bekannte Verknüpfungslogik 8, die alle Filterausgänge – mit Ausnahme des Filters 41 – gleichzeitig nach Signalen untersucht (detektiert) und durch entsprechendes Schliessen nur eines der elektronischen Schalter 91 bis 94 dafür sorgt, dass nur das Signal weiterverarbeitet wird, das jeweils am Ausgang des Hochpass-Filters auftritt, das von allen augenblicklich signalabgebenden Filtern der Filter 41 bis 44 die höchste Grenzfrequenz besitzt. Diese Weiterverarbeitung geschieht in an sich bekannter Weise zunächst durch Amplitudenbegrenzung in einem Signalbegrenzer 10, dem z.B. eine phasengeregelte Schleife (PLL) und weitere selbst nicht erfindungswesentliche, bekannte Baustufen folgen. Das Filter 41 ist in der Filterbank dasjenige mit der niedrigsten Grenzfrequenz und wird über 91 durchgeschaltet, wenn an den anderen Filtern kein Signal anliegt, z.B. im Stillstand oder während des Anfahrens.

In der Praxis erreicht das Störsignal bei ungünstiger Fahrbahn-Oberfläche, beispielsweise einer städtischen Strassenbahn, vor der erfindungsgemäss vorgesehenen Filterbank beispielsweise einen Durchschnittspegel von +12 dB realtiv zum Nutzsignalpegel. Das Verhältnis des Frequenzunterschiedes zwischen Störsignal und Nutzsignal liegt häufig bei 1 : 6 bis 1 : 10. Ein Amplitudenbegrenzer, der meist im Signalkanal der bekannten gattungsgemässen Geräte vorgesehen ist, macht unter diesen Umständen ohne die erfindungsgemässen Entstörmassnahmen eine verlässliche Nutzsignalauswertung unmöglich.

## Patentansprüche

1. Fahrzeug-Dopplerradargerät zur bordautonomen Geschwindigkeitsmessung eines erdgebundenen Fahrzeuges mit schräg zur Fahrbahn gerichtetem Antennendiagramm, einer im Dopplersignalkanal liegenden Filterbank (41 bis 44) und einer steuerbaren Verknüpfungslogik (8, 91 bis 94) zum Ausblenden niederfrequenter Störsignale, dadurch gekennzeichnet, dass die Filterbank (41 bis 44) in Form einer Hochpassfilterbank (41 bis 44) ausgebildet ist, dass die Anzahl der Hochpässe (41 bis 44) in der Filterbank und deren Filterordnungszahl nach Massgabe des zu erwartenden Geschwindigkeitsbereiches und der erwartbaren Störfrequenzen gewählt sind und dass die Verknüpfungslogik (8) elektronische Schalter (91 bis 94) in den Ausgangskanälen der einzelnen Hochpässe (41 bis 44) derart steuert, dass nur das Ausgangssignal desjenigen Hochpasses zur Gewinnung der Geschwindigkeitsinformation weiterverarbeitet wird, welcher von allen augenblicklich signalabgebenden Hochpässen die höchste Grenzfrequenz besitzt.

2. Radargerät nach Anspruch 1, dadurch gekennzeichnet, dass zwischen die Dopplersignalquelle (Ausgang von 2) und die Filterbank (41 bis 44) ein rauscharmer Verstärker (3) geschaltet ist.

3. Radargerät nach Anspruch 1 oder 2, dadurch gekennzeichnet, dass jedem der Hochpässe (41 bis 44) der Filterbank ein logarithmischer Verstärker (51 bis 54) folgt.

4. Radargerät nach einem der Ansprüche 1 bis 3, dadurch gekennzeichnet, dass das Ausgangssignal des Hochpasses (41) mit der niedrigsten Grenzfrequenz unmittelbar zur Gewinnung der Geschwindigkeitsinformation weiterverarbeitet wird, sofern die Verknüpfungslogik (8) von den übrigen Hochpässen (42 bis 44) keine Ausgangssignale empfängt.

5. Radargerät nach Anspruch 4, dadurch gekennzeichnet, dass der Verknüpfungslogik (8) die ggf. verstärkten (52 bis 54) Ausgangssignale der übrigen Hochpässe (42 bis 44) der Filterbank über zueinander seriell liegende Detektoren (61 bis 63) und Kippschaltungen (71 bis 73) zugeführt werden.

6. Radargerät nach Anspruch 5, dadurch gekennzeichnet, dass die Kippschaltungen Schmitt-Trigger (71 bis 73) sind.

## Claims

1. Vehicle Doppler radar apparatus for the autonomous measurement from within the vehicle itself of the speed of a vehicle travelling on the ground with antenna pattern inclined at an angle to the surface on which it is travelling, a filter bank (41 to 44) situated in the Doppler signal channel and a controllable switching logic circuit (8, 91 to 94) for fading out low frequency interference signals, characterized by the filter bank (41 to 44) being designed in the form of a high-pass filter bank (41 to 44), by the number of high-pass filters (41 to 44) in the filter bank and their filter ordinal number having been selected in accordance with the speed range to be expected and the interference frequencies to be expected, and by the switching logic (8) controlling electronic switches (91 to 94) in the output channels of the various high-pass filters (41 to 44) in such a way that only the output signal of that high-pass filter having the highest cut-off frequency of all high-pass filters issuing a signal at the moment is further processed in order to obtain the speed information.

2. Radar apparatus according to Claim 1, characterized by a low-noise amplifier (3) being connected between the Doppler signal source (output from 2) and the filter bank (41 to 44).

3. Radar apparatus according to Claim 1 or 2, characterized by a logarithmic amplifier (51 to 54) being connected in the circuit after each high-pass filter (41 to 44) in the filter bank.

4. Radar apparatus according to one of the Claims 1 to 3, characterized by the output signal of the high-pass filter (41) with the lowest cut-off frequency being further processed directly in order to obtain the speed information, provided the switching logic (8) receives no output signals from the other high-pass filters (42 to 44).

5. Radar apparatus according to Claim 4, characterized by the output signals, possibly amplified (52 to 54), of the other high-pass filters (42 to 44) in the filter bank being supplied to the switching logic circuit (8) through detectors (61 to 63) connected respectively in series and trigger circuits (71 to 73).

6. Radar apparatus according to Claim 5, characterized by the trigger circuits being Schmitt triggers (71 to 73).

## Revendications

1. Appareillage de radar Doppler installé à bord d'un véhicule terrestre pour la mesure autonome de la vitesse du véhicule, comprenant un diagramme d'antenne dirigé obliquement vers la chaussée, un banc de filtres (41 à 44) disposé dans le canal du signal Doppler et un dispositif logique de connexion (8, 91 à 94) susceptible d'être commandé pour éliminer des signaux parasites de basse fréquence, caractérisé en ce que le banc de filtres (41 à 44) est réalisé sous forme d'un banc de filtres passe-haut (41 à 44), que le nombre des filtres passe-haut (41 à 44) dans le banc et leur numéro d'ordre de disposition dans le banc sont choisis en fonction de la plage de vitesse prévue et des fréquences perturbatrices auxquelles on peut s'attendre et que le dispositif logique de connexion (8) commande des commutateurs électroniques (91 à 94) dans les canaux de sortie des différents filtres passe-haut (41 à 44) de manière que seul le signal de sortie du filtre passe-haut possédant la plus haute fréquence limite de tous les filtres passe-haut délivrant un signal à cet instant soit soumis au traitement consécutif pour l'obtention de l'information de vitesse.

2. Appareillage de radar selon la revendication 1, caractérisé en ce qu'un amplificateur à faible bruit (3) est intercalé entre la source de signal Doppler (sortie de 2) et le banc de filtres (41 à 44).

3. Appareillage de radar selon la revendication 1 ou 2, caractérisé en ce que chacun des filtres passe-haut (41 à 44) du banc est suivi d'un amplificateur logarithmique (51 à 54).

4. Appareillage de radar selon l'une des revendications 1 à 3, caractérisé en ce que le signal de sortie du filtre passe-haut (41) ayant la plus basse fréquence limite est directement soumis au traitement consécutif pour l'obtention de l'information de vitesse lorsque le dispositif logique de connexion (8) ne reçoit pas de signaux de sortie des autres filtres passe-haut (42 à 44).

5. Appareillage de radar selon la revendication 4, caractérisé en ce que les signaux de sortie, éventuellement amplifiés (52 à 54), des autres filtres passe-haut (42 à 44) du banc sont appliqués au dispositif logique de connexion (8) à travers des détecteurs (61 à 63) et des bascules (71 à 73) montés en série.

6. Appareillage de radar selon la revendication 5, caractérisé en ce que les bascules sont des bascules de Schmitt (71 à 73).

Signalbegrenzer

Dopplersignalausgang
z. PLL

Antenne

Radarmodul
(Sender, Koppler, Mischer)

rauscharmer
Vorverstärker

Hochpaß-
Filterbank

log. Verstärker

Detektor

Schmitt-
Trigger

Verknüpfungslogik

0 048 394